# EUROPEAN PATENT SPECIFICATION

(11) **EP 2 671 352 B1**
(45) Date of publication and mention of the grant of the patent: **01.05.2019**
(21) Application number: 11822869.1
(22) Date of filing: 07.12.2011
(51) Int. Cl.: H04L 12/709

(54) **SYSTEM AND METHOD FOR AGGREGATING AND ESTIMATING THE BANDWIDTH OF MULTIPLE NETWORK INTERFACES**
SYSTEM UND VERFAHREN ZUR AGGREGATION UND MESSUNG DER BANDBREITE MEHRERER NETZWERKSCHNITTSTELLEN
SYSTÈME ET PROCÉDÉ D'AGRÉGATION ET D'ESTIMATION DE BANDE PASSANTE DE PLUSIEURS INTERFACES RÉSEAU

(30) Priority: 02.02.2011 IN 299MU2011
(43) Date of publication of application: 11.12.2013
(73) Proprietor: Tata Consultancy Services Ltd., Mumbai 400 021, Maharashtra (IN)
(72) Inventor: BANDYOPADHYAY, Soma, Sector -V Kolkata - 700091 West Bengal (IN); NADAF, Shameemraj M, Kolkata - 700091 West Bengal (IN)
(74) Representative: Potter Clarkson
(86) International application number: PCT/IN2011/000838
(87) International publication number: WO 2012/104862

(56) References cited:
- EP-A1- 1 494 426
- US-A1- 2002 016 874
- Thomas Davis: "bonding", Linux , 19 November 2009 (2009-11-19), XP002673523, Retrieved from the Internet: URL:http://www.linuxfoundation.org/print/5 270#ARP_Monitor_Operation [retrieved on 2012-04-05]
- STEFAN AUST ET AL: "Evaluation of Linux Bonding Features", COMMUNICATION TECHNOLOGY,. 2006. ICCT '06. INTERNATIONAL CONFEREN CE ON, IEEE, PI, 1 November 2006 (2006-11-01), pages 1-6, XP031071935, ISBN: 978-1-4244-0800-9
- System Administration Guide: Network Interfaces and Network Virtualization: "Chapter 7: Introducing IPMP", , 1 January 2008 (2008-01-01), pages 95-118, XP002673524, Retrieved from the Internet: URL:http://www.filibeto.org/~aduritz/truet rue/solaris10/neworking/ipmp/ipmpov.pdf [retrieved on 2012-04-05]

## Description

### FIELD OF THE INVENTION

The present invention relates to the field of telecommunication. P articularly, the invention relates to a cross layer system for bandwidth aggregation and estimation further based on dynamic analysis of network conditions. More particularly, the invention provides a system and method that estimates bandwidth of multiple physical interfaces and distributes it further to such multiple physical interfaces.

### PRIOR ART REFERENCES

1) K. Chebrolu and R. R. Rao, "Bandwidth aggregation for real-time applications in heterogeneous wireless networks," IEEE Transactions on Mobile Computing, vol. 5, no. 4, pp. 388-403,2006.
2) Evensen, K.; Kaspar, D.; Engelstad, P.; Hansen, A.F.; Griwodz, C.; Halvorsen, P.; Simula Res. Lab., Lysaker, Norway "A network-layer proxy for bandwidth aggregation and reduction of IP packet reordering" in Local Computer Networks, 2009; http://simula.no/research/nd/publications/Simula.ND.369/simula pdf file.
3) K. Chebrolu, B. Raman, and R. R. Rao, "A network layer approach to enable TCP over multiple interfaces," Wireless Networks, vol. 11, no. 5, pp. 637-650, 2005.
4) Juan Carlos Fernandez, Tarik Taleb , Mohsen Guizani , Nei Kato-Bandwidth Aggregation-Aware Dynamic QoS Negotiation for Real-Time Video Streaming in Next-Generation Wireless Networks, IEEE transactions on multimedia, Vol. 11, No. 6,October 2009.
5) A. Habib, N. Christin, and J. Chuang, "Taking advantage of multihoming with session layer striping,"in INFOCOM,2006 http://www.andrew.cmu.edu/user/nicolasc/publications/gistripping.pdf
6) Horde: Flexible Application Driven Network Striping http://publications.csail.mit.edu/abstracts/abstracts05/horde/horde.html
7) Cross Layer Design of Ad-hoc Wireless Networks for Real-Time Media http://www.stanford.edu/~zhuxq/adhoc_project/adhoc_project.html
8) T. Taleb, K. Kashibuchi, A. Leonardi, S. Palazzo, K. Hashimoto, N. Kato, and Y. Nemoto, "A cross-layer approach for an efficient delivery of TCP/RTP-based multimedia applications in heterogeneous wireless networks," IEEE Trans. Veh. Technol., vol. 57, no. 6, pp. 3801-3814, Nov. 2008.
9) T. Taleb, T. Nakamura, and K. Hashimoto Bandwidth aggregation-aware dynamic Qos negotiation for real-time video streaming in next-generation wireless networks IEEE TRANSACTIONS ON MULTIMEDIA, VOL. 11, NO. 6, OCTOBER 2009
10) H. Adiseshu, G. Parulkar, and G. Varghese, "A reliable and scalable striping protocol," ACM SIGCOMM, 1996.
11) A.C. Snoeren, "Adaptive inverse multiplexing for wide-area wireless networks," in GLOBECOM, 1999.
12) J. Chesterfield, R. Chakravorty, I. Pratt, S. Banerjee, and P. Rodriguez, "Exploiting diversity to enhance multimedia streaming over cellular links," in INFOCOM, March 2005.
13) S. Shakkottai, E. Altman, and A. Kumar, "The case for non-cooperative multihoming of users to access points in IEEE 802.11 WLANs," in INFOCOM, 2006.
14) James Curtis, Tony McGregor "Review of Bandwidth Estimation Techniques" http://citeseerx.ist.psu.edu/viewdoc/summary?doi=10.1.1.29.779
15) Mayukh Saubhasik, Uwe Schmidt "Bandwidth Estimation and Rate Control in Bit Vampire" CPSC 527: Advanced Computer Networks. www.uweschmidt.org/files/network_project.pdf
16) Jiri Navratil and R. Les. Cottrell "ABwE :A Practical Approach to Available Bandwidth Estimation" http://www.nlanr.net/PAM2003/PAM2003papers/3781.pdf
17) T.G. Sultanov , A.M. Sukhov "Simulation technique for available bandwidth estimation" http://arxiv.org/PS_cache/arxiv/pdf/1007/1007.3341v1.pdf

### BACKGROUND OF THE INVENTION

Data transfer through multiple physical interfaces is widely studied for improving the total available bandwidth for network based applications. Most of the related work in this area requires proxy architecture, service level agreement and counter component at the destination, to realize the bandwidth aggregation either in adaptive and non-adaptive manners. Some of the prior arts known to us will now be discussed to understand the available technical solutions and shortcomings in the state of the art.

A network layer architecture consisting of an infrastructure proxy as mentioned reference number #1 of the prior art references or a multilink proxy as mentioned reference number #2 of the prior art references is used for simultaneous use of multiple interfaces and aggregation of the throughput of heterogeneous downlink streams.

The approach suggested in reference number #3 of the prior art references, uses a dynamic packet reordering mechanism of TCP streams over multiple links; also it requires a network proxy. Service level agreement as well as proxy is used in the middle of the network for scheduling the packets through multiple interfaces as mentioned in reference number #4.

Architecture for session-layer striping over multiple links is proposed in reference number #5 whi ch is based on single virtual layer socket. Furthermore ref erence number #6, describes a network middleware called Horde, which enables applications to control certain aspects of data stripping over multiple interfaces. It is further disclosed that this middleware architecture comprises 3 layers in which the higher layer provides an interface to interact with Horde; middle layer handles packet scheduling, bandwidth allocation, and the lower layer deals with network channels.

The cross layer framework as mentioned in prior art reference number # 7 proposes adaptation across many layers of the protocol stack to support delay-critical applications in adhoc scenario, such as conversational voice or real-time video.

The work presented in prior art reference number # 8 proposes to make changes to the five layers namely physical, data link, application, network, and transport layer like TCP to provide seamless delivery of multimedia services in heterogeneous wireless networks. Some modifications have been made to the Transport protocols that eventually make deployment of such an approach as difficult as it needs a corresponding component at the destination.

Prior art reference number # 8 discloses a dynamic QoS negotiation scheme for enabling bandwidth aggregation for video streaming in wireless networks. It is disclosed that multiple interfaces of the same technology can be striped for better performance at the link layer, which is referred to as bonding or trunking. Prior art reference number # 10 discloses a method of bandwidth aggregation on the link layer by striping data across bundle of physical channels.

An adaptive inverse multiplexing technique has been disclosed in prior art reference number # 11 whe re IP Packets are fragmented by the multiplexor and tunneled through multiple links using ML PPP (multi link ppp) over a link layer transfer protocol.

A method for channel aggregation in cellular networks is disclosed in prior art reference number # 12. The reference suggests that in order to improve resilience, parity codes are applied across channels rather than across packets.

Thomas Davis: "bonding", 19 November 2009 (2009-11-19), XP002673523 discloses Bonding driver options, Configuration of Bonding devices, querying Bonding configuration, Switch Configuration, Link Monitoring, Potential sources of trouble, SNMP agents, configuring Bonding for high availability and maximum throughput and switch behavior issues. In switch behavior issues, it discloses link establishment and failover delays wherein in case of duplication of traffic when the bonding device is first used, or after it has been idle for some period of time, a "ping" is issued to some host on the network and duplicated output from ping flags is noticed.

Stefan Aust Et Al: "Evaluation of Linux Bonding Features", Communication Technology, 2006. Icct'06. International Conference On, Ieee, Pi, 1 November 2006 (2006-11-01), XP031071935, discloses an evaluation of the Linux bonding implementation for wired interfaces. The Linus bonding provides methods to aggregate multiple wired interfaces to support load-balancing, fault tolerance and throughput improvement. It presents details about interface bonding in RedHat linux system and the measurement results of two bonded LAN interfaces using the round-robin bonding mode. Further, it discloses consideration of ARP monitoring mode for detecting the status for wireless interfaces.

System Administration Guide: Network Interfaces and Network Virtualization: "Chapter 7: Introducing IPMP", 1 January 2008 (2008-01-01), XP002673524, provides a guide on the administration of link aggregation. The guide also discloses a probe based failure detection technique mainly in wirebound interfaces. It detects failure detection and the type of failure detection in IPMP by sending ICMP probe messages to the target systems on the same local network and detects failure if no replies are made to consecutive probe messages. It also discloses a failure detection time on which the probing rate is dependent and a repair detection time.

US2002/016874 discloses an information network that extends between a first information relaying apparatus and a terminal, which are equipped with existing circuit multiplexing modules. Signals from the information relaying apparatus pass through additional information relaying apparatuses, which relay signals output from the information relaying apparatus. The information relaying apparatuses associate LAN lines between the information relaying apparatus and the terminal into separate groups and effectively monitor these LAN lines. If a failure is detected, then all LAN lines belonging to the group of the LAN line experiencing the failure are effectively shut down. As a result, circuit multiplexers in the information relaying apparatus are then instructed to use a different LAN line that is not experiencing failure so that communication can continue.

Some of the lacunae that exists in the prior art discussed above are that, firstly these research efforts are based on single or multiple interfaces and need counterpart in the destination; secondly the prior arts have not used multiple interfaces simultaneously to perform the bandwidth estimation. These approaches also do not make use of any cross layer technique.

Thus there exists a need to solve the long standing problem of bandwidth aggregation without using any corresponding component at the final destination or at any node, or a particular network architecture, or using any network proxy or management node and also without performing any modifications in the physical and data link layers and also estimating bandwidth of multiple physical interfaces.

### OBJECTIVES OF THE INVENTION

The primary objective of the invention is to provide a cross layer system which can perform bandwidth aggregation based on dynamic analysis of network condition, without using any corresponding component / counter component, or without using any network proxy or management system, or any specific network architecture.

Another objective of the present invention is to provide a method and system that provides a gateway of all data paths from upper layers to a data-link, physical layer through IP and vice versa.

Another objective of the present invention is to provide a method and system that uses a predefined internet control message protocol (ICMP) echo packet for measuring the network channel condition.

Another objective of the present invention is to provide a method and system for enhancing the bandwidth of a system significantly by adding up the available bandwidth of the existing active communication interfaces.
Another objective of the present invention is to provide a method and system for estimating the channel/network condition associated with each active physical interface.

Yet another objective of the invention is to provide a method and system for bandwidth aggregation that can be used for any transport layer protocol like TCP (transport control protocol) or UDP (user datagram protocol).

Yet another objective of the invention is to provide a method and system that can be configured to operate in aggregation mode or aggregation combination with estimation mode.

Still another objective of the invention is to provide a method and system for enabling the analysis for the transport header (TCP) statistic for performing bandwidth estimation.

### SUMMARY OF THE INVENTION

Before the present methods, systems, and hardware enablement are described, it is to be understood that this invention in not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention which will be limited only by the appended claims.

According to an aspect of the invention we provide a method as defined in claim 1. According to a further aspect of the invention we provide a system as defined in claim 6.

### BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings a few exemplary constructions of the invention; however, it is to be understood that the invention is not limited to the specific methods and system disclosed in the drawings.
Figure 1 is a flow diagram depicting method for aggregating and estimating the available bandwidth of multiple physical interfaces.
Figure 2 is a flow diagram that illustrates functional blocks of bandwidth aggregation system.

### DETAILED DESCRIPTION OF THE INVENTION

Some embodiments of this invention, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described. The disclosed embodiments are merely exemplary of the invention, which may be embodied in various forms.

Generally, the present invention relates to field of telecommunications. Particularly, this invention relates to a cross layer system which can perform bandwidth aggregation based on dynamic analysis of network condition.

We disclose a system for aggregating and estimating the bandwidth of the multiple physical interfaces, wherein the said system comprises:
a) one network driver module for aggregating and estimating the bandwidth of the multiple physical interfaces;
b) a user space of the network driver module for receiving the user defined input; and
c) physical interface connected with the network driver module for data transmission & estimation; and
d) at least two physical interfaces connected with the network driver module for aggregating, as well as estimating their bandwidths.

The present invention provides a method for aggregating and estimating the available bandwidth of multiple physical interfaces, wherein the said method comprises the processor implemented steps of:
creating, by a network driver module, a virtual interface for encapsulating the multiple physical interfaces,
assigning, by a network driver module, an IP address and a Netmask to the virtual interface and adding the virtual interface as a default entry in a routing table, wherein the multiple physical interfaces comprise at least one wired interface and at least one wireless interface;
aggregating, by the network driver module, the available bandwidth of active physical interfaces of the multiple physical interfaces present in the virtual interface based on dynamic analysis of network condition, wherein the available bandwidth is estimated dynamically by the network driver module at predefined time intervals, wherein the network channel condition of the active physical interfaces is estimated based on an average of Round Trip Time, RTT, obtained from transport header statistics and a pre-defined internet control message ICMP echo packet, wherein the network channel condition for the active physical interface is estimated by:
   sending the pre-defined internet control message ICMP echo packet from the active physical interface to a public IP address,
   receiving an echo reply for the each of the active physical interface, corresponding to the a pre-defined ICMP echo packet, from the public IP address, and
   determining a time difference between the sent ICMP echo packet and received echo reply, wherein the time difference indicates a round trip time, RTT, for the active physical interface;
   wherein data packets are distributed to the multiple physical interfaces, by the network driver module, based on the estimated network channel condition, and wherein the data packets, received at the active physical interface, are filtered using a hook function of a packet filtering mechanism in order to perform necessary modifications in the data packets before sending the data packets to an application;
   thereby performing the adaptive aggregation of the available bandwidth of the active physical interfaces, and, wherein the available bandwidth is aggregated and estimated in absence of a proxy support.

According to one of the embodiments, the present invention enables data over physical layer to communicate over both wireless and wired communication medium.

The present invention finds utility in wireless communication field and may be used to transfer data over short distances or long distances. It encompasses use of any type of fixed, mobile, and portable two-way radios, cellular telephones, personal digital assistants (PDAs), and wireless networking.

The present invention also finds utility in wired communication field and may be used for the transmission and reception of data over a wire-based communication technology. Examples include telephone networks, cable television or internet access, and fiber-optic communication.

According to one of the preferred embodiments of the invention the proposed cross layer system enhances the download and upload data transmission rates of application due to increase in bandwidth aggregation and thus enhances the QoS (quality of services).

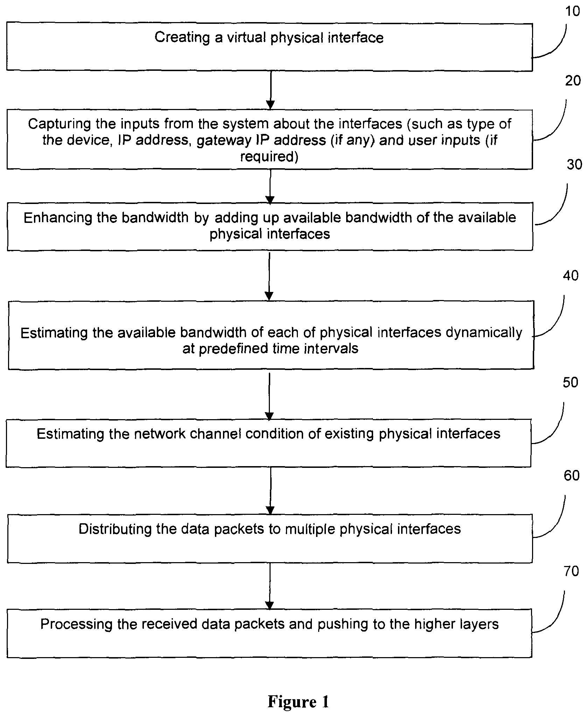

Figure 1 depicts a flow diagram for aggregating and estimating the available bandwidth of multiple physical interfaces according to one exemplary embodiment of the invention. The process starts at the step 10 wherein a virtual physical interface is created for encapsulating at least one existing physical interface by a network driver module. At the step 20, system inputs are captured and user defined inputs are taken if require. At the step 30, bandwidth is enhanced by adding up available bandwidths of the multiple physical interfaces. At the step 40, the available bandwidth of each of physical interface is estimated dynamically at predefined time intervals. At the step 50, the network channel condition of existing physical interfaces is estimated by the network driver module. At the step 60, wherein the data packets are distributed to multiple physical interfaces based on the estimated network channel condition by the network driver module. The process ends at the step 70, upon reception the packets are processed by this module and pushed to the higher layers, wherein the network driver module uses packet filtering (net filter) mechanism and associates a hook function for processing the received packets. The hook function is used to filter the packets just after their reception by the active interfaces. The associated hook function of the packet-filter performs the necessary modifications in the data packets, and assembles the data packet before sending to the application.

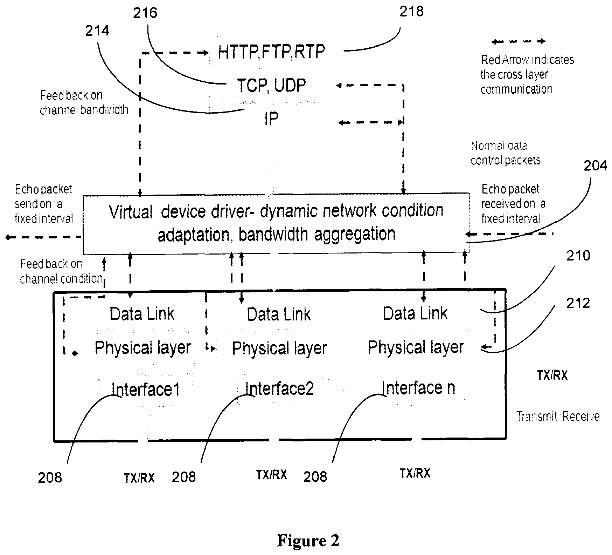

Figure 2 illustrates a system architecture diagram for functional blocks of bandwidth aggregation system. The said system comprises a network driver module 204, a physical interface 208, data link 210, physical layer 212, Internet Protocol (IP) 214, transport protocol header 216, and port number 218.

The system further comprises, a user space 206 (not shown in figure), and a kernel space 207 (not shown in figure).

According to one of the preferred embodiments of the invention, the said user space 206 exposes APIs (application programming interfaces) to gather the user defined inputs, as well as system captured inputs. The said user defined inputs comprise;
a. Domain name of the server with a public IP address to which the probe packets are to be sent for estimation of available bandwidth of the network interfaces.
b. Time interval for performing network estimation
c. QoS requirement of an application (optional)
d. Other optional parameters(like enabling or disabling network estimation)

The user inputs are provided by the user through command line.

The said system defined inputs comprise;
a. Information about the network interfaces (interface identifier, IP addresses, IP address of gateways if any) available for bandwidth aggregation and estimation. System captured inputs are obtained by doing an ioctl() function call with a datagram socket.
b. Information about the status of the virtual physical interfaces/device (i.e. interface is UP, or DOWN, or any change in interface/device status) is also obtained.

In another embodiment of the invention the kernel space 207 acts as a bridge between applications and the actual data processing. The user space 206 and kernel space 208 have a close bonding and both these components exchange control information by using ioctl () function call with a raw socket such as:
a. GETINFO: to collect information available with kernel space module about the network interfaces for aggregation.
b. SETINFO: to pass the information about the available network interfaces to the kernel space module.
c. NDMINFO (Network Diagnostics): to pass information related to bandwidth estimation to the kernel space module and also to collect the information about the available bandwidth of the network interfaces from the kernel space module.

In another embodiment of the invention the said system acts as a gateway of all the data paths from Internet protocol IP 214 (internet protocol) to the physical layer 212, starting from applications/upper layers and vice-versa. It distributes the data while transmitting among the existing active physical interfaces 208 based on the quality of services (QoS) requirement as specified by the application or by using the default configuration. It receives the data from the respective interfaces 208 and passes to the respective applications.

In another embodiment of the invention the network driver module 204 creates a virtual interface and assigns an IP address, netmask to it and adds this interface as the as default entry in the routing table. All the application data that comes from upper layer uses this IP address as the source address.

In another embodiment of the invention the network driver module 204 replaces its own IP address with the corresponding active physical interfaces 208' IP addresses while distributing the data to those interfaces and performs the necessary checksum calculations for internet protocol IP 214 and transport protocols headers 216 as required. During reception it replaces the actual IP addresses of those interfaces with its own IP address and performs the necessary checksum calculations for internet protocol IP 214 and transport protocols headers 216.

In another embodiment of the invention the network driver module 204 uses the active interfaces/devices as its slave network interfaces. It distributes the data packets from application based on some predefined identifiers for example port number 218 (HTTP packet or FTP packet etc.) and quality of services' QoS requirement as specified by the application (optional) through its user space module 206. It sends the distributed data packets directly to the transmit queue of its slave interfaces i.e. the active physical interface 208. It uses packet filtering (net filter) mechanism and associates a hook function for this purpose in the receive path. The hook function is used to filter the packets just after their reception by the active interfaces. The associated hook function of the packet-filter performs the necessary modifications in the data packets, and assembles the data packet before sending to the application.

In another embodiment of the invention the proposed system uses a predefined internet control message protocol (ICMP) echo packet 222 for measuring the network channel condition. The internet control message protocol (ICMP) echo packet is sent to any public IP address (for example-www.google.com) defined by user simultaneously through the existing multiple active interfaces. The destination with the public IP address sends back the echo-reply to active physical interface 208. The Proposed system determines the time differences between the sent ICMP echo and received ICMP echo-reply packets i.e., the round trip time (RTT) for the active interfaces and estimates the network condition. The time difference with a higher value signifies a poor network condition. The system maintains a timer which makes an echo packet to be sent at a fixed time interval (configurable).

In another embodiment of the invention the proposed system also analyses the transport header 216 (TCP) statistics and takes the average RTTs obtained from both the transport header 216 and ICMP probe packet.

In still another embodiment of the invention the cross layer aware bandwidth aggregation system as presented here, can enhance the bandwidth of a system significantly by adding up the available bandwidths of the existing active communication interfaces (wired and wireless) by the network driver module 204 without performing any modifications in the physical layer 212 and data link layer 210 of the existing interfaces. At the same time it estimates the channel/network condition associated with each active physical interfaces 208. The system does not need any counterpart or corresponding module in any node including the final destination or end system of the communication link. It can be used for any transport layer protocol 216 like TCP (transmission control protocol) and UDP (user datagram protocol). Importantly, it does not require any service level agreement and a proxy support. It can perform an adaptive bandwidth aggregation.

The preceding description has been presented with reference to various embodiments of the invention. Persons skilled in the art and technology to which this invention pertains will appreciate that alterations and changes in the described structures and methods of operation can be practiced without meaningfully departing from the principle, spirit and scope of this invention.

### ADVANTAGES OF THE INVENTION

1) The present invention does not require any counter component , or corresponding module at the destination or end system to perform bandwidth aggregation and estimation - therefore it is easy to deploy, manage and at the same time cost effective.
2) The present invention provides a method and system which does not require any proxy to perform bandwidth aggregation and estimation.
3) The present invention provides a method and system wherein aggregation is done based on the bandwidth estimation, i.e. this invents a method of adaptive bandwidth aggregation.
4) The present invention provides a method and system which enhances the download and uploads data transmission rates of the application and hence enhances the QoS (quality of service).
5) The present invention does not require any service level agreement and a proxy support and it can perform an adaptive bandwidth aggregation by using multiple physical interfaces.

## Claims

1. A method for aggregating and estimating available bandwidth of multiple physical interfaces, wherein the method comprises processor implemented steps of:
creating, by a network driver module (204), a virtual interface for encapsulating the multiple physical interfaces,
assigning, by the network driver module (204), an IP address and a Netmask to the virtual interface and adding the virtual interface as a default entry in a routing table, wherein the multiple physical interfaces comprise at least one wired interface and at least one wireless interface;
aggregating, by the network driver module (204), the available bandwidth of active physical interfaces of the multiple physical interfaces present in the virtual interface based on dynamic analysis of network condition, wherein the available bandwidth is estimated dynamically by the network driver module (204) at predefined time intervals, wherein the network channel condition of the active physical interfaces is estimated based on an average of Round Trip Time, RTT, obtained from transport header statistics and a pre-defined internet control message ICMP echo packet, wherein the network channel condition for the active physical interface is estimated by:
sending the pre-defined internet control message ICMP echo packet from the active physical interface to a public IP address,
receiving an echo reply for the each of the active physical interface, corresponding to the a pre-defined ICMP echo packet, from the public IP address, and
determining a time difference between the sent ICMP echo packet and received echo reply, wherein the time difference indicates a round trip time, RTT, for the active physical interface;
wherein data packets are distributed to the multiple physical interfaces, by the network driver module (204), based on the estimated network channel condition, and wherein the data packets, received at the active physical interface, are filtered using a hook function of a packet filtering mechanism in order to perform necessary modifications in the data packets before sending the data packets to an application;
thereby performing the adaptive aggregation of the available bandwidth of the active physical interfaces, and, wherein the available bandwidth is aggregated and estimated in absence of a proxy support.

2. The method of claim 1, further comprises,
replacing, by the network driver module, an IP address of the network driver module with corresponding active physical interfaces (208') IP addresses while distributing the data to the corresponding active physical interfaces and performing checksum calculations for internet protocol IP (214) and transport protocols headers (216), wherein during reception of the data packets, the network driver module, replaces IP address of the respective active physical interface with the IP address of the network driver module for transmission of data to the active physical interface and performing the checksum calculations for the internet protocol IP (214) and the transport protocols headers (216);
using the active interface as a slave network interface, by the network driver module (204) and distributing the data packets from application based on predefined identifiers and sending the distributed data packets directly to a transmit queue of the slave interface, wherein the network driver module uses a packet filtering mechanism and associates the hook function for the packet filtering mechanism in the receive path, wherein the hook function is used to filter the data packets just after the reception of the data packets by the active interface and the associated hook function of the data packets performs the modifications in the data packets, and assembles the data packets before sending to the application.

3. The method of claim 1, wherein the network driver module provides a single communication pipe for flow of data from the internet protocol IP to the active physical interface.

4. The method of claim 1, wherein the available bandwidth is aggregated and estimated in absence of any counter component, or corresponding module at the destination or end system.

5. The method of claim 1, wherein the available bandwidth is aggregated and estimated in absence of any service level agreement.

6. A system for aggregating and estimating available bandwidth of multiple physical interfaces using a network driver module (204), the system comprises the network driver module (204), a physical interface (208), a data link layer (210), physical layer (212), Internet Protocol, IP, (214), transport protocol header (216), the system comprising:
a processor; and
a memory coupled to the processor, wherein the processor is capable of executing program instructions stored in the memory, the program instructions that are configured to cause the processor to:
create a virtual interface for encapsulating the multiple physical interfaces,
assign an IP address and a Netmask to the virtual interface and adding the virtual interface as a default entry in a routing table, wherein the multiple physical interfaces comprise at least one wired interface and at least one wireless interface;
aggregate the available bandwidth of active physical interfaces of the multiple physical interfaces present in the virtual interface based on dynamic analysis of network condition, wherein the available bandwidth is estimated dynamically at predefined time intervals, wherein the network channel condition of the active physical interfaces is estimated based on an average of Round Trip Time, RTT, obtained from transport header statistics and a pre-defined internet control message, ICMP, echo packet, wherein the network channel condition for the active physical interface is estimated by:
sending the pre-defined ICMP echo packet from the active physical interface to a public IP address,
receiving an echo reply for each of the active physical interface, corresponding to the pre-defined ICMP echo packet, from the public IP address, and
determining a time difference between the sent ICMP echo packet and received echo reply, wherein the time difference indicates a round trip time, RTT, for the active physical interface;
wherein the program instructions further cause the processor to provide for data packets to be distributed to the multiple physical interfaces based on the estimated network channel condition, and wherein the data packets, received at the active physical interface, are filtered using a hook function of a packet filtering mechanism in order to perform necessary modifications in the data packets before sending the data packets to an application; thereby performing the adaptive aggregation of the available bandwidth of the active physical interfaces, and facilitating interaction amongst plurality of layers associated with the internet protocol, IP, wherein the available bandwidth is aggregated and estimated in absence of a proxy support.

7. The system of Claim 6, wherein the network driver module,
replaces an IP address of the network driver module with corresponding active physical interfaces (208') IP addresses while distributing the data to the corresponding active physical interfaces and perform necessary checksum calculations for internet protocol IP (214) and transport protocols headers (216), wherein during reception of the data packets, the network driver module, replaces IP address of the respective active physical interface with the IP address of the network driver module for transmission of data to the active physical interface and performing the checksum calculations for the internet protocol IP (214) and the transport protocols headers (216);
uses the active interface as a slave network interface and distributes the data packets from application based on predefined identifiers and sends the distributed data packets directly to a transmit queue of the slave interface, wherein the network driver module uses a packet filtering mechanism and associates a hook function for the packet filtering mechanism in the receive path, wherein the hook function is used to filter the data packets just after the reception of the data packets by the active interface and the associated hook function of the data packets perform modifications in the data packets, and assembles the data packets before sending to the application.

## Patentansprüche

1. Verfahren zum Aggregieren und Schätzen einer verfügbaren Bandbreite von mehreren physikalischen Schnittstellen, wobei das Verfahren die folgenden prozessorimplementierten Schritte umfasst:
Erstellen einer virtuellen Schnittstelle durch ein Netzwerktreibermodul (204), zum Einkapseln der mehreren physikalischen Schnittstellen,
Zuweisen einer IP-Adresse und einer Netzmaske durch das Netzwerktreibermodul (204) der virtuellen Schnittstelle und Hinzufügen der virtuellen Schnittstelle als einen Standardeintrag in einer Routingtabelle, wobei die mehreren physikalischen Schnittstellen wenigstens eine drahtgebundene Schnittstelle und wenigstens eine Drahtlosschnittstelle umfassen;
Aggregieren der verfügbaren Bandbreite von aktiven physikalischen Schnittstellen der mehreren physikalischen Schnittstellen, die in der virtuellen Schnittstelle vorhanden sind, durch das Netzwerktreibermodul (204), auf Grundlage einer dynamischen Analyse eines Netzwerkzustands, wobei die verfügbare Bandbreite dynamisch von dem Netzwerktreibermodul (204) zu vordefinierten Zeitintervallen geschätzt wird, wobei der Netzwerkkanalzustand der aktiven physikalischen Schnittstellen auf Grundlage einer durchschnittlichen Round Trip Zeit (*round trip time* - RTT), die von Transportheader-Statistiken erhalten wird, und eines vordefinierten Internet Control Message(ICMP)-Echopakets geschätzt wird, wobei der Netzwerkkanalzustand für die aktive physikalische Schnittstelle durch Folgendes geschätzt wird:
Senden des vordefinierten Internet Control Message(ICMP)-Echopakets von der aktiven physikalischen Schnittstelle an eine öffentliche IP-Adresse,
Empfangen einer Echoantwort von der öffentlichen IP-Adresse für jede der aktiven physikalischen Schnittstelle, die dem vordefinierten ICMP-Echopaket entspricht, und
Bestimmen eines Zeitunterschieds zwischen dem gesendeten ICMP-Echopaket und der empfangenen Echoantwort, wobei der Zeitunterschied eine Round Trip Zeit(RTT) für die aktive physikalische Schnittstelle angibt;
wobei Datenpakete durch das Netzwerktreibermodul (204) an die mehreren physikalischen Schnittstellen verteilt werden, auf Grundlage des geschätzten Netzwerkkanalzustands, und wobei die an der aktiven physikalischen Schnittstelle empfangenen Datenpakete unter Verwendung einer Hook-Funktion eines Paketfiltermechanismus gefiltert werden, um notwendige Modifikationen an den Datenpaketen durchzuführen, bevor die Datenpakete an eine Anwendung gesendet werden;
wodurch die anpassungsfähige Aggregation der verfügbaren Bandbreite der aktiven physikalischen Schnittstellen durchgeführt wird, und wobei die verfügbare Bandbreite in Abwesenheit einer Proxyunterstützung aggregiert und geschätzt wird.

2. Verfahren nach Anspruch 1, ferner Folgendes umfassend:
Ersetzen einer IP-Adresse des Netzwerktreibermoduls durch das Netzwerktreibermodul mit entsprechenden IP-Adressen von aktiven physikalischen Schnittstellen (208'), während die Daten an die entsprechenden aktiven physikalischen Schnittstellen verteilt und Prüfsummenberechnungen für Internetprotokoll IP (214) und Übertragungsprotokollheader (216) durchgeführt werden, wobei während des Empfangs der Datenpakete das Netzwerktreibermodul eine IP-Adresse der jeweiligen aktiven physikalischen Schnittstelle mit der IP-Adresse des Netzwerktreibermoduls zur Datenübertragung an die aktive physikalische Schnittstelle ersetzt und die Prüfsummenberechnungen für das Internetprotokoll IP (214) und die Übertragungsprotokollheader (216) durchgeführt werden;
Verwenden der aktiven Schnittstelle durch das Netzwerktreibermodul (204) als eine untergeordnete Netzwerkschnittstelle und Verteilen der Datenpakete von der Anwendung auf Grundlage von vordefinierten Bezeichnern und direktes Senden der verteilten Datenpakete an eine Übertragungswarteschlange der untergeordneten Schnittstelle, wobei das Netzwerktreibermodul einen Paketfiltermechanismus verwendet und die Hook-Funktion für den Paketfiltermechanismus in dem Empfangspfad verknüpft, wobei die Hook-Funktion durch die aktive Schnittstelle zum Filtern der Datenpakete sofort nach dem Empfang der Datenpakete verwendet wird und die verknüpfte Hook-Funktion der Datenpakete die Modifikationen an den Datenpaketen durchführt und die Datenpakete vor dem Senden an die Anwendung assembliert.

3. Verfahren nach Anspruch 1, wobei das Netzwerktreibermodul eine einzelne Kommunikationskanal für einen Datenfluss von dem Internetprotokoll IP zu der aktiven physikalischen Schnittstelle bereitstellt.

4. Verfahren nach Anspruch 1, wobei die verfügbare Bandbreite aggregiert und in Abwesenheit einer beliebigen Gegenkomponente oder eines entsprechenden Moduls an dem Ziel oder dem Endsystem geschätzt wird.

5. Verfahren nach Anspruch 1, wobei die verfügbare Bandbreite aggregiert und in Abwesenheit einer Vereinbarung zur Dienstleistungsebene geschätzt wird.

6. System zum Aggregieren und Schätzen einer verfügbaren Bandbreite von mehreren physikalischen Schnittstellen unter Verwendung eines Netzwerktreibermoduls (204), wobei das System das Netzwerktreibermodul (204), eine physikalische Schnittstelle (208), eine Leitungsschicht (210), eine physikalische Schicht (212), ein Internetprotokoll IP (214), einen Übertragungsprotokollheader (216) umfasst, wobei das System Folgendes umfasst:
einen Prozessor; und
einen mit dem Prozessor gekoppelten Speicher, wobei der Prozessor geeignet ist, in dem Speicher gespeicherte Programmanweisungen auszuführen, wobei die Programmanweisungen konfiguriert sind, um den Prozessor zu Folgendem zu veranlassen:
Erstellen einer virtuellen Schnittstelle zum Einkapseln der mehreren physikalischen Schnittstellen,
Zuweisen einer IP-Adresse und einer Netzmaske zu der virtuellen Schnittstelle und Hinzufügen der virtuellen Schnittstelle als einen Standardeintrag in einer Routingtabelle, wobei die mehreren physikalischen Schnittstellen wenigstens eine drahtgebundene Schnittstelle und wenigstens eine Drahtlosschnittstelle umfassen;
Aggregieren der verfügbaren Bandbreite von aktiven physikalischen Schnittstellen von den mehreren physikalischen Schnittstellen, die in der virtuellen Schnittstelle vorhanden sind, auf Grundlage einer dynamischen Analyse eines Netzwerkzustands, wobei die verfügbare Bandbreite dynamisch zu vordefinierten Zeitintervallen geschätzt wird, wobei der Netzwerkkanalzustand der aktiven physikalischen Schnittstellen auf Grundlage einer durchschnittlichen Round Trip Zeit (RTT), die von Transportheader-Statistiken erhalten wird, und eines vordefinierten Internet Control Message(ICMP)-Echopakets geschätzt wird, wobei der Netzwerkkanalzustand für die aktive physikalische Schnittstelle durch Folgendes geschätzt wird:
Senden des vordefinierten ICMP-Echopakets von der aktiven physikalischen Schnittstelle an eine öffentliche IP-Adresse,
Empfangen einer Echoantwort von der öffentlichen IP-Adresse für jede der aktiven physikalischen Schnittstelle, die dem vordefinierten ICMP-Echopaket entspricht, und
Bestimmen eines Zeitunterschieds zwischen dem gesendeten ICMP-Echopaket und der empfangenen Echoantwort, wobei der Zeitunterschied eine Round Trip Zeit (RTT) für die aktive physikalische Schnittstelle angibt;
wobei die Programmanweisungen den Prozessor ferner veranlassen, das Verteilen von Datenpaketen an die mehreren physikalischen Schnittstellen bereitzustellen, auf Grundlage des geschätzten Netzwerkkanalzustands, und wobei die an der aktiven physikalischen Schnittstelle empfangenen Datenpakete unter Verwendung einer Hook-Funktion eines Paketfiltermechanismus gefiltert werden, um notwendige Modifikationen an den Datenpaketen durchzuführen, bevor die Datenpakete an eine Anwendung gesendet werden; wodurch die anpassungsfähige Aggregation der verfügbaren Bandbreite der aktiven physikalischen Schnittstellen durchgeführt wird und die Interaktion zwischen mehreren mit dem Internetprotokoll IP verknüpften Schichten ermöglicht wird, und wobei die verfügbare Bandbreite in Abwesenheit einer Proxyunterstützung aggregiert und geschätzt wird.

7. System nach Anspruch 6, wobei das Netzwerktreibermodul
eine IP-Adresse des Netzwerktreibermoduls mit entsprechenden IP-Adressen von aktiven physikalischen Schnittstellen (208') ersetzt, während die Daten an die entsprechenden aktiven physikalischen Schnittstellen verteilt werden und Prüfsummenberechnungen für Internetprotokoll IP (214) und Übertragungsprotokollheader (216) durchgeführt werden, wobei während des Empfangs der Datenpakete das Netzwerktreibermodul eine IP-Adresse der jeweiligen aktiven physikalischen Schnittstelle mit der IP-Adresse des Netzwerktreibermoduls zur Datenübertragung an die aktive physikalische Schnittstelle ersetzt und die Prüfsummenberechnungen für das Internetprotokoll IP (214) und die Übertragungsprotokollheader (216) durchgeführt werden;
die aktive Schnittstelle als eine untergeordnete Netzwerkschnittstelle verwendet und die Datenpakete von der Anwendung auf Grundlage von vordefinierten Bezeichnern verteilt und die verteilten Datenpakete direkt an eine Übertragungswarteschlange der untergeordneten Schnittstelle sendet, wobei das Netzwerktreibermodul einen Paketfiltermechanismus verwendet und eine Hook-Funktion für den Paketfiltermechanismus in dem Empfangspfad verknüpft, wobei die Hook-Funktion durch die aktive Schnittstelle zum Filtern der Datenpakete sofort nach dem Empfang der Datenpakete verwendet wird und die verknüpfte Hook-Funktion der Datenpakete Modifikationen in den Datenpaketen durchführt und die Datenpakete vor dem Senden an die Anwendung assembliert.

## Revendications

1. Procédé d'agrégation et d'estimation de la bande passante disponible de multiples interfaces physiques, le procédé comprenant les étapes implémentées par un processeur consistant à :
créer, par un module de commande de réseau (204), une interface virtuelle permettant d'encapsuler les multiples interfaces physiques,
attribuer, grâce au module de commande de réseau (204), une adresse IP et un masque de réseau à l'interface virtuelle et ajouter l'interface virtuelle comme une entrée par défaut dans une table de routage, les multiples interfaces physiques comprenant au moins une interface câblée et au moins une interface sans fil ;
agréger, par le module de commande de réseau (204), la bande passante disponible d'interfaces physiques actives des multiples interfaces physiques présentes dans l'interface virtuelle en fonction de l'analyse dynamique de l'état du réseau, la bande passante disponible étant estimée dynamiquement par le module de commande de réseau (204) à des intervalles de temps prédéfinis, l'état des canaux de réseau des interfaces physiques actives étant estimé en fonction d'une moyenne de la Durée de rotation (RTT) obtenue selon des statistiques de rubrique transport et un paquet prédéfini d'écho d'ICMP de message de commande Internet, l'état des canaux de réseau pour l'interface physique active étant estimé par :
l'envoi du paquet prédéfini d'écho d'ICMP de message de commande Internet de l'interface physique active à une adresse IP publique,
la réception d'une réponse d'écho pour chacune des interfaces physiques actives, correspondant à un paquet d'écho d'ICMP prédéfini, à partir de l'adresse IP publique, et
la détermination d'un déphasage entre le paquet d'écho d'ICMP et la réponse reçue d'écho, le déphasage indiquant un temps de rotation, RTT, correspondant à l'interface active ;
les paquets de données étant distribués aux multiples interfaces physiques, par le module de commande de réseau (204), en fonction de l'état estimé des canaux de réseau, et les paquets de données reçus au niveau de l'interface physique étant filtrés à l'aide d'une fonction hook d'un mécanisme de filtrage de paquet afin de réaliser les modifications nécessaires dans les paquets de données avant d'envoyer les paquets de données vers une application ;
ce qui permet d'effectuer l'agrégation adaptative de la bande passante disponible des interfaces physiques actives, et la bande passante disponible étant agrégée et estimée en l'absence d'un support mandataire.

2. Procédé selon la revendication 1, comprenant en outre
le remplacement, par le module de commande de réseau, d'une adresse IP du module de commande de réseau par des adresses IP d'interfaces physiques actives correspondantes (208') pendant qu'on distribue les données aux interfaces physiques actives correspondantes et la réalisation de calculs de sommes de contrôle pour l'IP (214) de protocole internet et pour les rubriques (216) de protocoles de transport, et lors de la réception des paquets de données, le module de commande de réseau remplace l'adresse IP de l'interface physique active respective par l'adresse IP du module de commande de réseau pour transmission de données jusqu'à l'interface physique active et pour la réalisation des calculs de somme de contrôle pour l'IP (214) de protocole internet et pour les rubriques (216) de protocoles de transport ;
l'utilisation de l'interface active en tant qu'interface de réseau esclave, par le module de commande de réseau (204) et la distribution des paquets de données à partir de l'application en fonction d'identifiants prédéfinis et l'envoi des paquets de données distribués à une file d'attente de transmission de l'interface esclave, le module de commande de réseau utilisant un mécanisme de filtrage de paquets et associant la fonction hook pour le mécanisme de filtrage de paquets dans la voie de réception, la fonction hook servant à filtrer les paquets de données juste après la réception des paquets de données par l'interface active et la fonction hook associée des paquets de données effectuant les modifications dans les paquets de données, et assemblant les paquets de données avant l'envoi à l'application.

3. Procédé selon la revendication 1, dans lequel le module de commande de réseau procure un seul tuyau de communication pour le flux de données de l'IP de protocole internet à l'interface physique active.

4. Procédé selon la revendication 1, dans lequel la bande passante disponible est agrégée et estimée en l'absence de toute composante de compteur ou de module correspondant au niveau du système de destination ou final.

5. Procédé selon la revendication 1, dans lequel la bande passante disponible est agrégée et estimée en l'absence de tout accord sur les niveaux de service.

6. Système d'agrégation et d'estimation de la bande passante disponible de multiples interfaces physiques à l'aide d'un module de commande de réseau (204), le système comprenant le module de commande de réseau (204), une interface physique (208), une couche de liaison de données (210), une couche physique (212), un Protocole internet (IP) (214), une rubrique de protocole de transport (216), le système comprenant :
un processeur ; et
une mémoire couplée au processeur, le processeur étant à même d'exécuter des instructions de programme enregistrées dans la mémoire, les instructions de programme étant configurées pour amener le processeur à :
créer une interface virtuelle permettant d'encapsuler les multiples interfaces physiques,
attribuer une adresse IP et un masque de réseau à l'interface virtuelle et à ajouter l'interface virtuelle en tant qu'entrée par défaut dans une table de routage, les multiples interfaces physiques comprenant au moins une interface câblée et au moins une interface sans fil ;
agréger la bande passante disponible des interfaces physiques actives des multiples interfaces physiques présentes dans l'interface virtuelle en fonction de l'analyse dynamique de l'état du réseau, la bande passante disponible étant estimée dynamiquement à des intervalles prédéfinis de temps, l'état des canaux de réseau des interfaces physiques actives étant estimé en fonction d'un Temps moyen de rotation (RTT) obtenu à partir des statistiques de rubrique de transport et d'un paquet prédéfini d'écho d'ICMP de message de commande internet, l'état des canaux de réseau pour l'interface physique active étant estimé par :
l'envoi du paquet prédéfini d'écho d'ICMP de l'interface physique active à une adresse IP publique,
la réception d'une réponse d'écho pour chacune des interfaces physiques actives, correspondant au paquet prédéfini d'écho d'ICMP à partir de l'adresse IP publique, et
la détermination d'un déphase entre le paquet envoyé d'écho d'ICMP et la réponse reçue par écho, le déphasage indiquant un temps de rotation, RTT, pour l'interface physique active ;
les instructions de programme amenant en outre le processeur à faire en sorte que les paquets de données soient distribués aux multiples interfaces physiques en fonction de l'état estimé des canaux de réseau, et les paquets de données, reçus au niveau de l'interface physique active, étant filtrés à l'aide d'une fonction hook d'un mécanisme de filtrage de paquets afin d'effectuer une modification nécessaire dans les paquets de données avant d'envoyer les paquets de données à une application ; ce qui permet d'effectuer l'agrégation adaptative de la bande passante disponible des interfaces physiques actives et ce qui facilite l'interaction parmi une pluralité de couches associées au protocole internet, IP, la bande passante disponible étant agrégée et estimée en l'absence d'un support mandataire.

7. Système selon la revendication 6, dans lequel le module de commande de réseau,
remplace une adresse IP du module de commande de réseau par des adresses IP d'interfaces physiques actives correspondantes (208') tout en distribuant les données aux interfaces physiques actives correspondantes, et effectue les calculs nécessaires de somme de contrôle pour l'IP de protocole internet (214) et pour les rubriques de protocoles de transport (216), lors de la réception des paquets de données, le module de commande de réseau remplaçant l'adresse IP de l'interface physique active respective par l'adresse IP du module de commande de réseau pour la transmission de données à l'interface physique active et pour effectuer les calculs de sommes de contrôle pour l'IP de protocole internet (214) et pour les rubriques de protocoles de transport (216) ;
utilise l'interface active en tant qu'interface de réseau esclave et distribue les paquets de données à partir de l'application en fonction des identifiants prédéfinis et envoie les paquets distribués de données directement à une file d'attente de transmission de l'interface esclave, le module de commande de réseau utilisant un mécanisme de filtrage de paquets et associant une fonction hook pour le mécanisme de filtrage de paquets dans la voie de réception, la fonction hook servant à filtrer les paquets de données juste après réception des paquets de données par l'interface active et la fonction hook associée des paquets de données effectue des modifications dans les paquets de données et assemble les paquets de données avant envoi à l'application.
